# EUROPÄISCHE PATENTANMELDUNG

(11) **EP 3 957 552 A1**
(43) Veröffentlichungstag der Anmeldung: **23.02.2022**
(21) Anmeldenummer: 21178969.8
(22) Anmeldetag: 11.06.2021
(51) Int. Cl.: B62D 55/253, B62D 55/12

(54) **KETTENFAHRZEUG MIT EINEM KETTENLAUFWERK SOWIE TRIEBRAD UND SPANNRAD HIERFÜR**

(30) Priorität: 17.08.2020 DE 102020210434
(71) Anmelder: Kässbohrer Geländefahrzeug AG, 88471 Laupheim (DE)
(72) Erfinder: Zhirnyy, Roman, 123182 Moskau (RU); Bulychau, Anton, Minsk City (BY)
(74) Vertreter: Patentanwälte Ruff, Wilhelm, Beier, Dauster & Partner mbB

(57) **Zusammenfassung**

Ein Kettenfahrzeug mit einem Kettenlaufwerk, das zwei Laufwerksseiten mit jeweils einer umlaufenden Kette sowie mit jeweils einem Triebrad, einem Spannrad sowie mehreren Laufrädern aufweist, wobei das Triebrad - in Vorwärtsfahrtrichtung des Kettenfahrzeugs gesehen - an einem hinteren Endbereich der Laufwerksseite angeordnet ist und im Fahrbetrieb ein unteres Kettentrum der Kette auf Zug belastet, und wobei die umlaufende Kette eine Vielzahl von quer zu einer Kettenlaufrichtung erstreckte Kettenstege mit jeweils einem Spurbügel aufweist, die über in Kettenlaufrichtung parallel zueinander ausgerichtete flexible Kettenbänder miteinander verbunden sind, ist bekannt.

Erfindungsgemäß ist das Kettenlaufwerk für eine bauartbedingte Höchstgeschwindigkeit von mehr als 50 km/h ausgelegt, und die Spurbügel sind quer zur Kettenlaufrichtung asymmetrisch relativ zu der Kette angeordnet.

Einsatz für Arbeitsfahrzeuge in schwergängigem Gelände.

## Beschreibung

Die Erfindung betrifft ein Kettenfahrzeug mit einem an einem Fahrzeugtragrahmen angeordneten Kettenlaufwerk, das zwei Laufwerksseiten mit jeweils einer umlaufenden Kette sowie mit jeweils einem Triebrad, einem Spannrad sowie mehreren Laufrädern aufweist, wobei das Triebrad - in Vorwärtsfahrtrichtung des Kettenfahrzeugs gesehen - an einem hinteren Endbereich der Laufwerksseite angeordnet ist und im Fahrbetrieb ein unteres Kettentrum der Kette auf Zug belastet, und wobei die umlaufende Kette eine Vielzahl von quer zu einer Kettenlaufrichtung erstreckten Kettenstegen mit jeweils einem Spurbügel aufweist, die über in Kettenlaufrichtung parallel zueinander ausgerichtete flexible Kettenbänder miteinander verbunden sind. Die Erfindung betrifft zudem ein Triebrad sowie ein Spannrad für ein derartiges Kettenfahrzeug.

Ein solches Kettenfahrzeug ist aus der EP 3 222 499 B1 bekannt. Das bekannte Kettenfahrzeug ist ein ziviles Fahrzeug, das zum Bau und zur Pflege von Pipelines, zum Bau und zur Wartung von Strom- oder Telefonleitungen und für ähnliche Arbeitszwecke eingesetzt wird. Das Kettenfahrzeug weist ein an einem Fahrzeugtragrahmen angeordnetes Kettenlaufwerk mit zwei Laufwerksseiten auf, die jeweils mit einer um ein Triebrad, ein Spannrad und mehrere Laufräder umlaufenden Kette versehen sind. Das Triebrad ist auf jeder Laufwerksseite - auf eine Vorwärtsfahrtrichtung des Kettenfahrzeugs bezogen - in einem rückseitigen Endbereich der jeweiligen Laufwerksseite positioniert. Das Triebrad, das Spannrad und die Laufräder sind in einer gemeinsamen vertikalen Fahrzeuglängsebene ausgerichtet. Die jeweilige Kette mit Kettenbändern und quer zur Kettenlaufrichtung erstreckten Kettenstegen erstreckt sich symmetrisch zu dieser vertikalen Fahrzeuglängsebene, so dass das Triebrad, das Spannrad und die Laufräder auf halber Breite relativ zu der Kette positioniert sind.

Aufgabe der Erfindung ist es, ein Kettenfahrzeug, ein Triebrad und ein Spannrad der eingangs genannten Art zu schaffen, die gegenüber dem Stand der Technik verbesserte Einsatzmöglichkeiten bieten.

Für das Kettenfahrzeug wird diese Aufgabe dadurch gelöst, dass das Kettenlaufwerk für eine bauartbedingte Höchstgeschwindigkeit von mehr als 50 km/h ausgelegt ist und dass die Spurbügel quer zur Kettenlaufrichtung asymmetrisch versetzt relativ zu einer Mitte der Kette angeordnet sind. Die Spurbügel sind demzufolge nicht zentrisch und symmetrisch, sondern vielmehr versetzt und asymmetrisch innerhalb der umlaufenden Kette positioniert. Die Spurbügel sind relativ zu einer in Kettenlaufrichtung erstreckten vertikalen Mittellängsebene der Kette quer zur Kettenlaufrichtung versetzt, und zwar entweder nach innen oder nach außen zu dem Fahrzeugtragrahmen. In vorteilhafter Weise sind die Spurbügel innerhalb der Kette zu einer Fahrzeugmitte hin, d.h. zu dem Fahrzeugtragrahmen hin, versetzt. Dadurch ist es möglich, eine Spurbreite des Kettenfahrzeugs zu vergrößern. Die Spurbreite entspricht dem Abstand der beiden Vertikalebenen beider Laufwerksseiten zueinander, in denen das jeweilige Triebrad, das Spannrad und die Laufräder angeordnet sind. Eine größere Spurbreite ermöglicht eine höhere Stabilität des Kettenfahrzeugs im Fahrbetrieb und zudem eine breitere Tragrahmengestaltung des Kettenfahrzeugs, wodurch sich verbesserte Nutzungsmöglichkeiten des Fahrzeugtragrahmens ergeben. Die größere Spurbreite aufgrund der asymmetrischen Kettengestaltung verbessert Fahreigenschaften des Kettenfahrzeugs. Dadurch, dass das Kettenlaufwerk für eine bauartbedingte Höchstgeschwindigkeit von mehr als 50 km/h ausgelegt ist, ist das Kettenlaufwerk mit Schnelllaufketten versehen, bei denen Maßnahmen getroffen sind, um einen durch einen schnelllaufbedingten erhöhten Kettenlaufwerksverschleiß zu reduzieren.

In Ausgestaltung der Erfindung sind die Kettenstege asymmetrisch relativ zu der Mittellängsebene gestaltet. Vorzugsweise weisen die Kettenstege eine im Fahrbetrieb auf einem Untergrund aufstehende Lauffläche auf, die sich lediglich über einen Teil der Länge des jeweiligen Kettenstegs erstreckt, die jedoch symmetrisch zum jeweiligen Spurbügel ausgerichtet ist. Der Kettensteg selbst erstreckt sich zum Fahrzeugtragrahmen und damit zur Fahrzeugmitte hin jedoch über eine kürzere Länge als nach außen, d.h. von dem Fahrzeugtragrahmen weg. Dadurch ist es möglich, außenseitig, d.h. außen neben dem jeweiligen Spurbügel, die Kettenstege mit einer größeren Anzahl von Kettenbändern zu verbinden als innenseitig des jeweiligen Spurbügels.

Erfindungsgemäß weist das Triebrad mehrere quer zur Kettenlaufrichtung nebeneinander angeordnete Funktionsabschnitte auf mit einem zentralen Spurbügelführungsabschnitt, einem relativ zu dem Fahrzeugtragrahmen inneren Kettenstegstützabschnitt und einem relativ zu dem Fahrzeugtragrahmen äußeren Kettenbandstützabschnitt. Die zusätzlichen Funktionsabschnitte stabilisieren die Kette quer zur Kettenlaufrichtung und ermöglichen so höhere Kettenlaufgeschwindigkeiten und eine höhere Spurtreue für das Kettenlaufwerk. Sie tragen somit zur Schnelllauffähigkeit des Kettenlaufwerks bei.

In weiterer Ausgestaltung der Erfindung ist der innere Kettenstegstützabschnitt schmaler gestaltet als der äußere Kettenbandstützabschnitt. Diese Relation ist quer zur Kettenlaufrichtung gesehen. Dadurch ist es möglich, das Triebrad relativ nahe zum Fahrzeugtragrahmen in Fahrzeugquerrichtung zu positionieren und dennoch eine sichere Stützung der Kettenstege der Kette zu gewährleisten.

In weiterer Ausgestaltung der Erfindung ist eine umlaufende Stützfläche des inneren Kettenstegstützabschnitts härter gestaltet als eine umlaufende Lauffläche des äußeren Kettenbandstützabschnitts. Auch hierdurch wird die Laufstabilität der Kette im Fahrbetrieb erhöht.

In weiterer Ausgestaltung der Erfindung weist die Lauffläche des äußeren Kettenbandstützabschnitts einen elastisch nachgiebigen Kunststoffmantel, insbesondere aus Polyurethan, auf. Die elastisch nachgiebige Flexibilität des Kunststoffmantels ermöglicht eine weiche Abstützung des entsprechenden Kettenbands der Kette im Fahrbetrieb, wodurch sich eine Dämpfung und demzufolge ein besseres Fahrverhalten für das Kettenlaufwerk ergibt.

In weiterer Ausgestaltung der Erfindung weist der zentrale Spurbügelführungsabschnitt entsprechend einer Teilung der Kettenstege über einen Außenumfang des Spurbügelführungsabschnittes gleichmäßig verteilt eine Vielzahl von Rollenanordnungen auf, die die Spurbügel wälzbeweglich führen, wobei gegenüberliegende Seitenflanken des zentralen Spurbügelführungsabschnitts asymmetrisch zu einer Radialmittelebene des Spurbügelführungsabschnitts ausgeführt sind, wobei insbesondere eine innere Seitenflanke eine größere Neigung zu der Radialebene aufweist als eine äußere Seitenflanke. Die innere Seitenflanke ist flacher gestaltet als die äußere Seitenflanke. Diese Ausgestaltung ist für einen Fahrbetrieb des Kettenfahrzeugs bei Kurvenfahrten besonders vorteilhaft, da bei Kurvenfahrten ein Versatz des unteren Kettentrums relativ zu dem Triebrad erfolgt. Die Gestaltung des zentralen Spurbügelführungsabschnitts gemäß der beschriebenen Ausgestaltung ermöglicht ein sanftes und sicheres Zurückführen dieses Versatzes in eine konzentrische Spurbügelführung, die eine sichere Zugkraftübertragung des Triebrads auf die jeweilige Kette bewirkt. Da das Triebrad rückseitig der jeweiligen Laufwerksseite angeordnet ist, wird das untere Kettentrum im Fahrbetrieb auf Zug belastet. Die Rollenanordnungen reduzieren die Reibung beim Einlaufen der Spurbügel, so dass auch höhere Kettenlaufgeschwindigkeiten erzielt werden können, ohne dass sich ein Verschleiß entsprechender Kettenfunktionsteile nennenswert erhöht. Vorzugsweise ist jede Rollenanordnung durch eine Doppelrolle gebildet, wobei eine Achse den Spurbügelführungsabschnitt quer zur Kettenlaufrichtung durchsetzt und die beiden Rollen der Doppelrolle außen- und innenseitig relativ zu dem Spurbügelführungsabschnitt angeordnet und an der Achse drehbeweglich gelagert sind. Entsprechende Laufflächen der Rollen sind mit einem Kunststoffmantel versehen, das eine hohe Verschleißfestigkeit bei gleichzeitig hoher Griffigkeit miteinander kombiniert. Die Rollen sind quer zur Kettenlaufrichtung so breit gestaltet, dass sie sich jeweils quer zur Kettenlaufrichtung im Bereich der jeweiligen Seitenflanken über eine quer zur Kettenlaufrichtung gesehene Erstreckung des jeweiligen Spurbügels hinaus erstrecken. Dies ermöglicht auch bei entsprechendem Querversatz der Spurbügel beim Einlaufen zwischen die Rollenanordnungen des Triebrades während einer Kurvenfahrt eine zuverlässige Zugkraftübertragung von dem Triebrad auf die Kette.

In weiterer Ausgestaltung der Erfindung weist das Spannrad einen zentralen Spurbügelführungsring und einen außenseitig anschließenden Funktionsring auf, der zur Kettenbandabstützung vorgesehen ist. Auch das Spannrad ist analog des Triebrads quer zur Kettenlaufrichtung asymmetrisch gestaltet. Der außenseitig anschließende Funktionsring dient analog des Kettenbandstützabschnitts des Triebrads zur Abstützung wenigstens eines seitlich außen an die Spurbügel anschließenden Kettenbands der Kette. Hierdurch wird eine Fahrstabilität des Kettenlaufwerks weiter erhöht.

In weiterer Ausgestaltung der Erfindung weist jeder Spurbügel zwischen jeweils zwei Bügelhörnern eine abschnittsweise plane Abstützfläche auf, deren in Kettenlaufrichtung gesehene Erstreckung größer ist als eine Breite des zugehörigen Kettenstegs, insbesondere einer Kettenstegunterseite, mittels der der Kettensteg an wenigstens einem Kettenband befestigt ist. Der Bereich zwischen den beiden Bügelhörnern jedes Spurbügels, der hier als Abstützfläche bezeichnet ist, bildet die Kontaktfläche mit dem zentralen Spurbügelführungsabschnitt des Triebrads. Der plane Abschnitt der Abstützfläche gewährleistet eine besonders stabile Abstützung auf dem Spurbügelführungsabschnitt des Triebrads, dessen Mantel vorteilhaft ebenfalls koaxial zu einer Drehachse des Triebrads ausgerichtet ist und demzufolge mit dem planen Abschnitt der Abstützfläche korreliert, um eine flächige gegenseitige Auflage zu erzielen. Ein Kippen der Kettenstege quer zur Kettenlaufrichtung wird hierdurch reduziert. Die Länge der Abstützfläche in Kettenlaufrichtung ist größer als die entsprechende Erstreckung des Kettenstegs, wodurch sich eine besonders gute Führung der Spurbügel am Triebrad ergibt.

Für das Triebrad wird die der Erfindung zugrunde liegende Aufgabe dadurch gelöst, dass das Triebrad mehrere quer zur Kettenlaufrichtung nebeneinander angeordnete Funktionsabschnitte aufweist mit einem zentralen Spurbügelführungsabschnitt, einem relativ zu einem Fahrzeugtragrahmen inneren Kettenstegstützabschnitt und einem relativ zu dem Fahrzeugtragrahmen äußeren Kettenbandstützabschnitt. Zudem ist bei dem Triebrad gemäß einer Ausgestaltung der innere Kettenstegstützabschnitt schmäler gestaltet als der äußere Kettenbandstützabschnitt. Gemäß einer weiteren Ausgestaltung ist eine umlaufende Stützfläche des inneren Kettenstegstützabschnitts härter gestaltet als eine umlaufende Lauffläche des äußeren Kettenbandstützabschnitts. Vorzugsweise weist die Lauffläche des äußeren Kettenbandstützabschnitts einen elastisch nachgiebigen Kunststoffmantel, insbesondere aus Polyurethan, auf. Die Vorteile dieser verschiedenen Merkmale wurden zuvor bereits beschrieben, so dass zur Vermeidung von Wiederholungen auf die vorhergehenden Ausführungen verwiesen wird.

Für das Spannrad wird die der Erfindung zugrunde liegende Aufgabe dadurch gelöst, dass das Spannrad einen zentralen Spurbügelführungsring und einen außenseitig anschließenden Funktionsring aufweist, der zur Kettenbandabstützung vorgesehen ist. Die Vorteile dieser Ausführung wurden ebenfalls zuvor bereits beschrieben, so dass auf die vorigen Ausführungen verwiesen wird.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einer Seitenansicht eine Ausführungsform eines erfindungsgemäßen Kettenfahrzeugs,
- Fig. 2: in einer Ansicht von unten einen Teilbereich einer Kette einer Laufwerksseite des Kettenfahrzeugs nach Fig. 1,
- Fig. 3: eine Frontansicht des Ausschnitts der Kette gemäß Fig. 2,
- Fig. 4: eine Seitenansicht des Ausschnitts der Kette gemäß den Fig. 2 und 3,
- Fig. 5: in vergrößerter Darstellung einen rückseitigen Endbereich der in Fahrtrichtung linken Laufwerksseite des Kettenfahrzeugs nach Fig. 1,
- Fig. 6: eine Querschnittsdarstellung des Endbereichs nach Fig. 5 unter Weglassung eines oberen Kettentrums,
- Fig. 7: in perspektivischer Darstellung ein Triebrad des rückseitigen Endbereichs gemäß den Fig. 5 und 6,
- Fig. 8: in anderer perspektivischer Darstellung das Triebrad gemäß Fig. 7,
- Fig. 9: eine Seitenansicht des Triebrads gemäß den Fig. 7 und 8 unter Weglassung von Rollenanordnungen im Bereich eines zentralen Spurbügelführungsabschnitts des Triebrads gemäß den Fig. 7 und 8,
- Fig. 10: eine perspektivische Darstellung des Triebrads gemäß Fig. 9 unter Weglassung der Rollenanordnungen,
- Fig. 11: in einer Seitenansicht ein Spannrad der Laufwerksseite des Kettenfahrzeugs gemäß Fig. 1, das an einem frontseitigen Endbereich der Laufwerksseite angeordnet ist,
- Fig. 12: eine Seitenansicht des Triebrads gemäß den Fig. 7 und 8,
- Fig. 13: eine perspektivische Darstellung des Spannrads gemäß Fig. 11,
- Fig. 14: eine weitere perspektivische Darstellung des Spannrads gemäß Fig. 11 und
- Fig. 15: in vergrößerter Darstellung einen Querschnitt durch einen Kettensteg der Kette der Laufwerksseite des Kettenfahrzeugs gemäß Fig. 1.

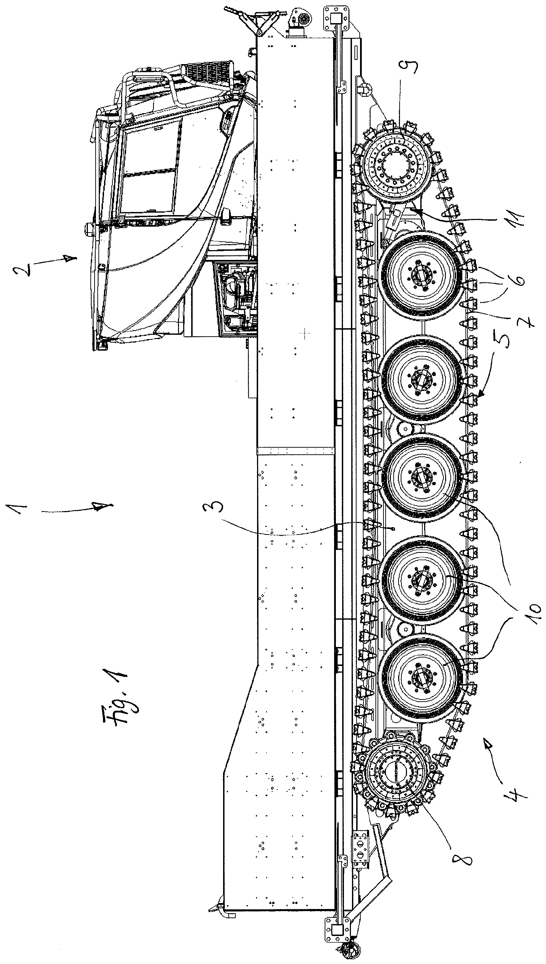

Ein Kettenfahrzeug 1 gemäß Fig. 1 weist frontseitig ein Fahrerhaus 2 auf, das auf einem Tragrahmen 3 gehalten ist. Der Tragrahmen 3 trägt in nicht näher dargestellter Weise ein Antriebssystem mit einem Verbrennungsmotor sowie auf gegenüberliegenden Fahrzeugseiten ein Kettenlaufwerk. Das Kettenlaufwerk ist auf jeder der beiden Laufwerksseiten 4 spiegelsymmetrisch zu einer vertikalen Mittellängsebene des Kettenfahrzeugs 1, im Übrigen aber identisch gestaltet. Jede der beiden Laufwerksseiten 4 weist rückseitig ein Triebrad 8 und frontseitig ein Spannrad 9 auf, zwischen denen am Tragrahmen 3 insgesamt fünf Laufräder 10 gelagert sind. Das Triebrad 8, das Spannrad 9 und die Laufräder 10 werden von einer umlaufenden Kette 5 umgeben. Dem Spannrad 9, das frontseitig an der Laufwerksseite 4 vorgesehen ist, ist ein Spannsystem 11 zugeordnet, das das Spannrad 9 verstellen kann, um eine Kettenspannung der Kette 5 zu verändern.

Das Triebrad 8 jeder Laufwerksseite 4 ist durch einen Hydromotor angetrieben, der Teil eines elektrohydraulischen Fahrantriebsystems ist. Eine Verteilerpumpe des elektrohydraulischen Fahrantriebsystems wird durch einen zentralen Verbrennungsmotor, vorliegend in Form eines Dieselmotors, angetrieben. Das Kettenlaufwerk mit den beiden Laufwerksseiten 4 ist derart gestaltet, dass die Ketten 5 schnelllauffähig sind. Dies bedeutet, dass das Kettenfahrzeug 1 eine bauartbedingte Höchstgeschwindigkeit von mehr als 50 km/h aufweist. Sowohl die Kette 5 als auch das Triebrad 8 und das Spannrad 9 sind, wie nachfolgend näher beschrieben wird, für eine Schnelllauffähigkeit des Kettenlaufwerks ausgelegt.

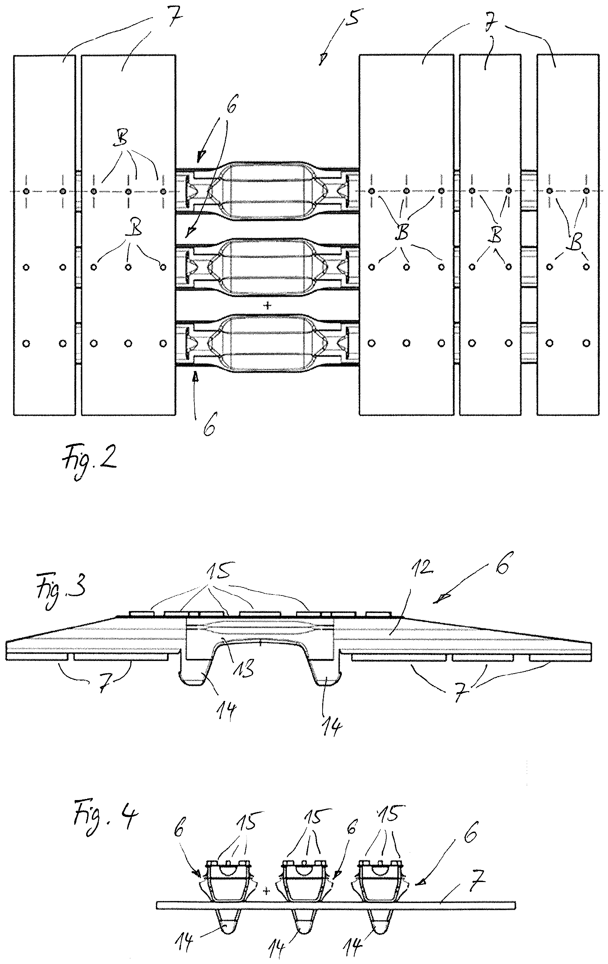

Wie anhand der Fig. 2 erkennbar ist, ist die Kette 5 asymmetrisch gestaltet. Die Kette 5 ist aus insgesamt fünf flexiblen Kettenbändern 7 sowie einer Vielzahl von Kettenstegen 6 aufgebaut, die auch als Querträger bezeichnet werden. Die Kettenbänder 7 erstrecken sich in Kettenlaufrichtung und damit in Fahrzeuglängsrichtung. Die Kettenstege 6 sind außenseitig auf die Kettenbänder 7 aufgesetzt und mithilfe von Befestigungsmitteln B quer zur Kettenlaufrichtung in gleichmäßigen Abständen zueinander mit den Kettenbändern 7 verbunden. Die Kettenbänder 7 sind vorzugsweise Kautschukbänder, die durch Gewebeeinlagen verstärkt sind.

Jeder Kettensteg 6 ist mit einem Spurbügel 13 versehen, der zwei in montiertem Zustand nach innen weisende und quer zur Kettenlaufrichtung zueinander beabstandete Bügelhörner 14 aufweist. Die Bügelhörner sind einstückig zu einem Querträgerabschnitt 12 jedes Kettenstegs 6 (Fig. 3). Wie anhand der Fig. 3 erkennbar ist, ist jeder Kettensteg 6 relativ zu einer vertikalen Mittelebene der jeweiligen Laufwerksseite 4, in denen das Triebrad 8, die Laufräder 10 und das Spannrad 9 drehbar sind, asymmetrisch gestaltet. Auf einer in den Fig. 2 und 3 linken Seite ist der Kettensteg 6 kürzer gestaltet als auf einer in den Fig. 2 und 3 rechten Seite. Die linke Seite in den Fig. 2 und 3 entspricht einer Innenseite des Kettenlaufwerks, d.h. einer dem Tragrahmen 3 zugewandten Seite. Die nach außen weisende Seite, die länger ist als der innere Bereich des Querträgerabschnitts 12, erstreckt sich gegenüberliegend zu dem Tragrahmen 3 zu einer Fahrzeugaußenseite hin.

Eine Kettensteglauffläche 15, die durch Gummiprofilierungen gestaltet ist, erstreckt sich symmetrisch zu dem Spurbügel 13 und damit auch symmetrisch zu der vertikalen Längsebene, in der die Räder der Laufwerksseite 4 angeordnet sind.

Wie anhand der Fig. 2 und 3 erkennbar ist, ist jeder Kettensteg 6 mit seinem Querträgerabschnitt 12 über die Befestigungsmittel B mit den insgesamt fünf Kettenbändern 7 verbunden. Dabei weist die Kette 5 zwei breite Kettenbänder 5 auf, die die Spurbügel 13 innen- und außenseitig - auf das Kettenfahrzeug bezogen - flankieren. Zudem ist innenseitig des inneren breiten Kettenbands ein schmales Kettenband vorgesehen. Außenseitig neben dem äußeren breiten Kettenband schließen zwei schmale Kettenbänder 7 an, wobei die schmalen Kettenbänder der Kette 5 jeweils eine gleiche Breite aufweisen. Auch die breiten Kettenbänder, die die Spurbügel 13 innen- und außenseitig flankieren, weisen identische Breiten auf. Damit ist jeder Kettensteg 6 außenseitig des Spurbügels 13 mit drei Kettenbändern 7 und innenseitig des jeweiligen Spurbügels 13 mit zwei Kettenbändern 7 verbunden.

Anhand der Fig. 4 ist in Ergänzung zur Darstellung gemäß Fig. 1 erkennbar, wie die Kettenstege 6 auf den Kettenbändern 7 positioniert sind. Die Kettenstege 6 sind in Fig. 4 so ausgerichtet, dass die Bügelhörner 14 der Spurbügel nach unten und die Laufflächen 15 nach oben weisen. Damit ist der obere Bereich der bei montierter Kette 5 außenliegende Abschnitt und der untere Bereich mit den Bügelhörnern 14 der nach innen weisende Abschnitt der Kette 5. Die Kette 5 wird im Bereich des hinteren Triebrads 8 und im Bereich des vorderen Spannrads 9 umgelenkt.

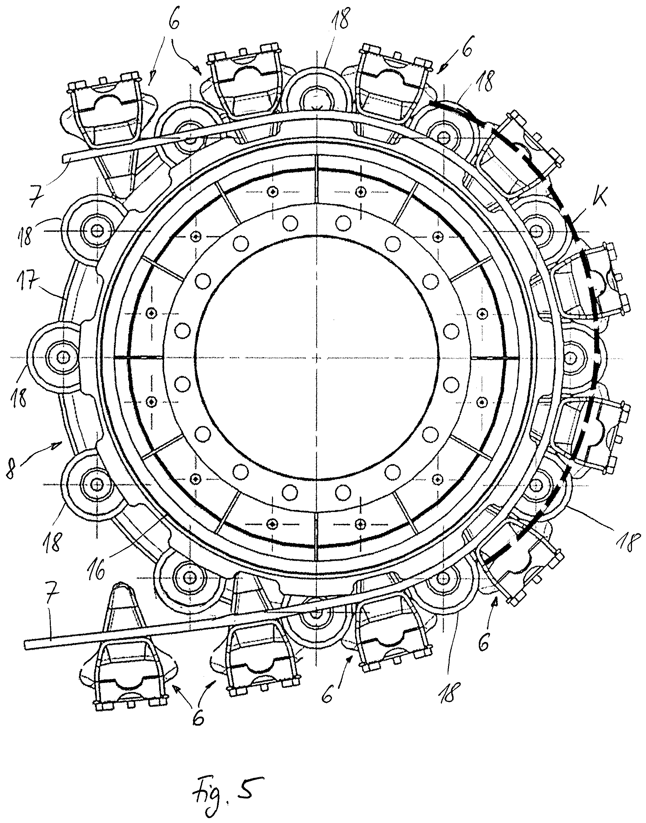

Anhand der Fig. 5 ist die Umlenkung der Kette 5 um das Triebrad 8 erkennbar. Da das Triebrad 8 hinten im Bereich der Laufwerksseite 4 angeordnet ist, wird bei Vorwärtsfahrt des Kettenfahrzeugs 1 ein unteres Kettentrum durch das entsprechend in Fig. 5 im Gegenuhrzeigersinn angetriebene Triebrad auf Zug belastet. Auf der in Fig. 1 erkennbaren rechten Laufwerksseite 4 wird das Triebrad 8 dementsprechend im Uhrzeigersinn angetrieben, um das untere Kettentrum der Kette 5 bei Vorwärtsfahrt auf Zug zu belasten.

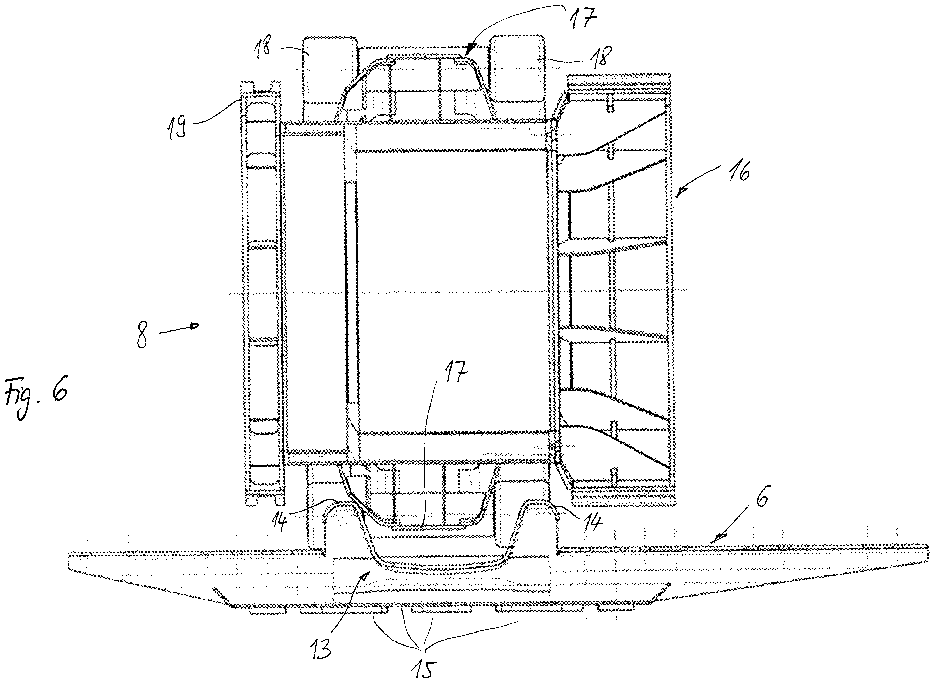

Anhand der Fig. 6 ist zudem erkennbar, dass bei einer Kurvenfahrt des Kettenfahrzeugs 1 das untere Kettentrum vor dem Einlaufen in das Triebrad 8 gegenüber einer vertikalen Triebradebene, die gleichzeitig die vertikale Längsebene für die Drehlagerung der Laufräder 10 und des Spannrads 9 definiert, nach außen versetzt ist. Das Triebrad 8 ist, wie nachfolgend ausgeführt wird, derart gestaltet, dass die Kette 5 bei der Umlenkung um das Triebrad 8 wieder in die konzentrische Ausrichtung relativ zum Triebrad 8 zurückgeführt wird. Anhand der gestrichelten dicken Linie K in Fig. 5 ist erkennbar, über welchen Umfang das Triebrad 8 die Kette 5 so umlenkt, dass sich ein im Wesentlichen vollständig zentrischer Eingriff zwischen den Spurbügeln 13 der Kettenstege 6 und dem Triebrad 8 ergibt.

Da die Kette 5 mit ihren asymmetrisch gestalteten Kettenstegen 6 und der asymmetrischen Verteilung der Kettenbänder 7 (siehe Fig. 2) zusätzlich zu den Zugbelastungen auf die Kette auch noch Kippbelastungen ausgesetzt ist, ist das Triebrad 8 derart gestaltet, dass die Kette 5 nicht nur im Bereich der Spurbügel 13 bei der Umlenkung um das Triebrad 8 sicher abgestützt ist, sondern zusätzlich auch noch eine Abstützung der Kette 5 sowohl innerhalb der Spurbügel 13 als auch außerhalb der Spurbügel 13 vorgenommen wird.

Hierzu ist das Triebrad 8, wie anhand der Fig. 5 bis 10 und 12 erkennbar ist, zum einen mit einem zentralen Spurbügelführungsabschnitt 17 sowie zudem mit einem relativ zu dem Tragrahmen 3 außen liegenden Kettenbandführungsabschnitt 16 und mit einem relativ zu dem Tragrahmen 3 innen liegenden, d.h. gegenüber dem zentralen Spurbügelführungsabschnitt 17 zur Fahrzeugmitte hin versetzt angeordneten Kettenstegführungsabschnitt 19 versehen. Der zentrale Spurbügelführungsabschnitt 17, der äußere Kettenbandführungsabschnitt 16 und der innere Kettenstegführungsabschnitt 19 sind fest miteinander verbunden. Der zentrale Spurbügelführungsabschnitt 17 weist eine umlaufende, plane zylindrische Führungsfläche 20 für die Spurbügel 13 auf, wobei die Stützfläche 20 relativ zu einer Drehachse des Triebrads 8 koaxial ausgeführt ist. Die ringförmig umlaufende Stützfläche 20 ist in gleichmäßiger Teilung unterbrochen durch höckerförmige Auswölbungen 25, die sich quer zur Kettenlaufrichtung und damit parallel zu der Drehachse des Triebrads 8 erstrecken und im Wesentlichen hohlzylindrisch ausgeführt sind. Ein entsprechender Hohlraum 26 jeder Auswölbung 25 ist zu beiden Seitenflanken des Spurbügelführungsabschnitts 17 hin offen und dient zur Lagerung einer Achse für jeweils eine Rollenanordnung 18. Die Rollenanordnung 18 weist ein Rollenpaar auf, wobei jeweils eine Laufrolle innenseitig und die andere Rolle 18 außenseitig zu der Auswölbung 25 positioniert ist. Jede Rolle der paarweisen Rollenanordnung 18 ist drehbeweglich um die entsprechende Achse der jeweiligen Auswölbung 25 gelagert.

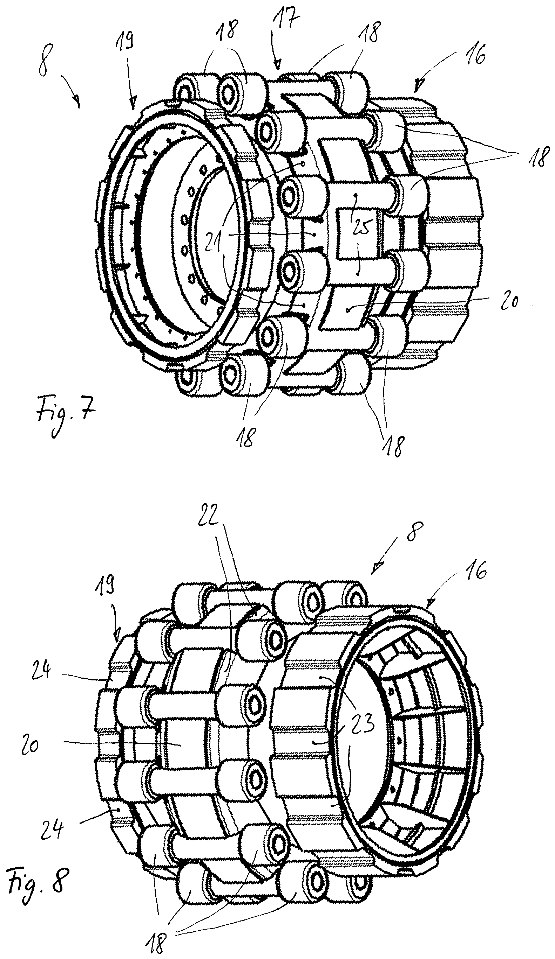

Wie anhand der Fig. 6, 7, 9 und 10 sowie 12 gut erkennbar ist, ist eine nach innen weisende Seitenflanke 21 des Spurbügelführungsabschnitts 17 mit einer Neigung versehen, die wesentlich flacher ist als eine Neigung der gegenüberliegenden, außen liegenden Seitenflanke 22 (siehe insbesondere Fig. 8). Damit weist die innenliegende Seitenflanke 21 eine größere Neigung zu der Radialebene des Spurbügelführungsabschnittes 17 auf als die äußere Seitenfläche. Die entsprechend sanft ansteigende Neigung der inneren Seitenflanke 21, und zwar umlaufend über einen gesamten Umfang der ringförmigen Seitenflanke 21, in Verbindung mit der steilen äußeren Seitenflanke 22 ergibt eine asymmetrische Gestaltung des Spurbügelführungsabschnitts 17 des Triebrads 8. Die flache Neigung der inneren Seitenflanke 21 dient dazu, einen Verschleiß des Spurbügelführungsabschnitts 17 des Triebrads 8 im Fahrbetrieb des Kettenfahrzeugs 1 zu reduzieren. Denn wie anhand der Fig. 6 erkennbar ist, ist das untere Kettentrum bei einer Kurvenfahrt im Fahrbetrieb des Kettenfahrzeugs gegenüber dem Triebrad 8 vor dem Umlauf um das Triebrad 8 seitlich nach außen versetzt. Dadurch trifft das innere Bügelhorn 14 des jeweiligen Spurbügels 13 jedes Kettenstegs 6 auf diese innere Seitenflanke 21. Dadurch, dass diese innere Seitenflanke 21 gegenüber der äußeren Seitenflanke lediglich flach geneigt ist, ergibt sich ein vergleichsweise weicher Kontakt beim Einlaufen der Kette 5 im Bereich des unteren Kettentrums in das Triebrad 8. Neben einem reduzierten Verschleiß gewährleistet die vergleichsweise geringe Steigung der inneren Seitenflanke 21 zudem ein sanftes Abgleiten der inneren Bügelhörner 14 der Spurbügel 13 nach innen, wodurch die Zentrierung der Kettenstege 6 mit ihren Spurbügeln 13 auf dem Spurbügelführungsabschnitt 17 beim Einlaufen des unteren Kettentrums verbessert wird.

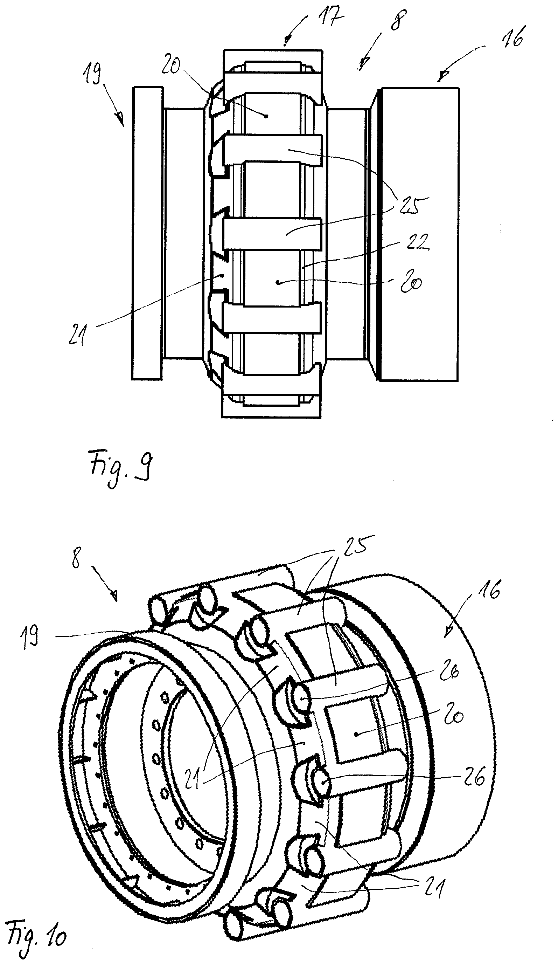

Um dennoch eine freie Drehbeweglichkeit der paarweisen Rollen der Rollenanordnungen 18 zu ermöglichen, ist die innere Seitenflanke 21 im Bereich dieser Rollen jeweils zylinderabschnittsweise ausgespart, wie den Fig. 9 und 10 gut entnommen werden kann.

Der an den Spurbügelführungsabschnitt 17 nach außen drehfest anschließende Kettenbandführungsabschnitt 16 ist im Wesentlichen zylindrisch ausgeführt und dient zur Stützung des die Spurbügel 13 außenseitig flankierenden breiten Kettenbands 7. Ein Außenmantel des Kettenbandführungsabschnitts 16 ist mit einer Oberflächenbeschichtung versehen, die als Polyurethanbeschichtung ausgeführt ist. Wie den Fig. 7 und 8 sowie 12 entnommen werden kann, ist diese Beschichtung mit einer der Teilung der Kettenstege 6 entsprechenden Profilierung versehen. Die umlaufende Profilierung wird durch eine Vielzahl von nach innen und nach außen offenen Quernuten 23 gebildet, deren in Umfangsrichtung erstreckte Breite etwa der Breite jeweils eines Kettenstegs 6 entspricht. Diese Quernuten 13 dienen dazu, Muttern oder Schraubenköpfe der Befestigungsmittel B beim Umlaufen der Kette 5 aufzunehmen, mittels derer das Kettenband 7 mit den Kettenstegen 6 verbunden ist.

Der Spurbügelführungsabschnitt 17 ist auch innenseitig durch einen weiteren Funktionsabschnitt flankiert, der als ringförmiger und koaxial zur Drehachse des Triebrads 8 ausgerichteter Kettenstegführungsabschnitt 19 gestaltet ist. Auch der Kettenstegführungsabschnitt 19 ist an seinem Außenumfang mit einer umlaufenden Profilierung versehen, die Quernuten 24 aufweist, deren Teilung den Quernuten 23 des außen liegenden Kettenbandführungsabschnitts 16 entspricht. Die auch als Aussparungen bezeichneten Quernuten 24 dienen in gleicher Weise zur Aufnahme von Schraubenköpfen oder Muttern der Befestigungsmittel B für das innen liegende breite Kettenband 7. Somit sind die beiden, die Spurbügel 13 innen- und außenseitig flankierenden Kettenbänder 7 weitgehend flächig auf dem Außenumfang des jeweiligen äußeren und inneren seitlichen Funktionsabschnitts des Triebrads 8 abgestützt, ohne dass die nach innen abragenden Abschnitte der Befestigungsmittel B diese flächige Abstützung unterbrechen oder behindern.

Auch der innen liegende Kettenstegführungsabschnitt 19 ist im Bereich seines Außenumfangs mit einer Kunststoffbeschichtung, insbesondere einer Polyurethanbeschichtung, versehen, die jedoch härter ausgeführt ist als die Beschichtung des Außenumfangs des außen liegenden Kettenbandführungsabschnitts 16.

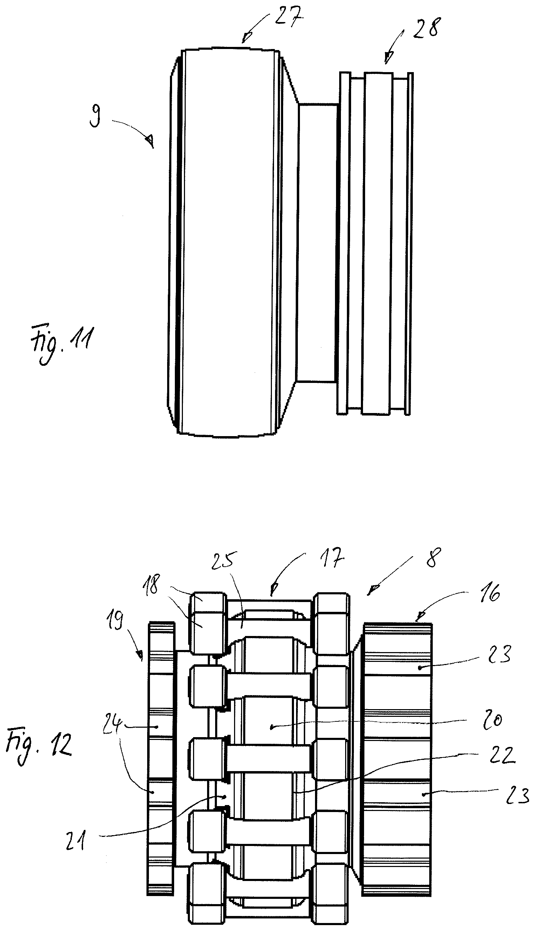

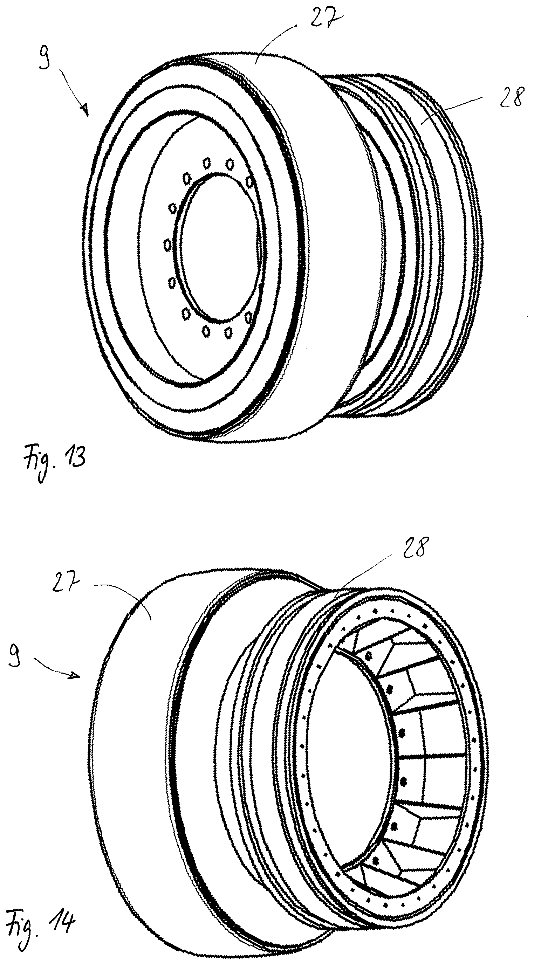

Wie anhand der Fig. 11 und 13, 14 erkennbar ist, ist auch das Spannrad 9 asymmetrisch gestaltet mit einem zentralen Spurbügelführungsring 27 einerseits und einem seitlich nach außen versetzten Kettenbandführungsring 28. Ein Außenmantel des Spurbügelführungsrings 27 ist - im Querschnitt gesehen - bombiert gestaltet und weist somit eine etwa konvexe Wölbung auf. Diese konvexe Wölbung wird durch eine elastisch nachgiebige Kunststoffbeschichtung, insbesondere eine Polyurethanbeschichtung, gebildet.

Der seitliche Kettenbandführungsring 28 ist, wie den Fig. 11 und 13, 14 entnehmbar ist, mit zwei in Umfangsrichtung ringförmig umlaufenden Längsprofilierungen in Form von Ringnuten versehen, die ebenfalls dazu vorgesehen sind, entsprechende Schraubenköpfe oder Muttern der Befestigungsmittel des Kettenbands 7 bei der Umlenkung um das Spannrad 9 aufzunehmen.

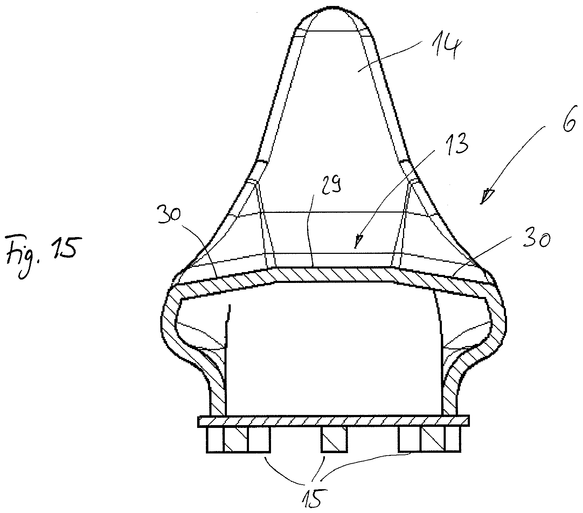

Die Spurbügel 13 sind ebenfalls zur Stabilisierung der Kette bei der Umlenkung um das Triebrad 8 gegenüber bekannten Spurbügeln verbessert. Wie anhand der Fig. 15 erkennbar ist, weist der Spurbügel 13 zwischen den beiden Bügelhörnern 14 eine in Kettenlaufrichtung relativ breite Erstreckung auf. Dabei werden eine plane zentrale Abstützfläche 29 sowie zwei gegenüber der zentralen Abstützfläche 29 symmetrisch nach vorne und nach hinten geneigte vordere und hintere Abstützflächen vorgesehen. Die Gestaltung der Abstützflächen 29, 30 erfolgt in einfacher Weise durch entsprechendes Stauchen eines Rohlings, aus dem der Spurbügel und der Kettensteg 6 hergestellt werden. Anhand der Fig. 15 ist auch erkennbar, dass die Breite der Abstützflächen 29, 30 größer ist als eine Breite des Kettensteges 6, vorliegend der Lauffläche 15 des Kettenstegs 6. Der Querträgerabschnitt 12 jedes Kettenstegs 6 und der Spurbügel 13 mit seinen Bügelhörnern 14 und den Abstützflächen 29, 30 werden einstückig aus Metall hergestellt. Die Kettenstege 6 können nach der Herstellung ergänzend mit einem Kunststoffüberzug, insbesondere einem Kautschuküberzug, versehen werden.

## Patentansprüche

1. Kettenfahrzeug (1) mit einem an einem Fahrzeugtragrahmen angeordneten Kettenlaufwerk, das zwei Laufwerksseiten (4) mit jeweils einer umlaufenden Kette (5) sowie mit jeweils einem Triebrad (8), einem Spannrad (9) sowie mehreren Laufrädern (10) aufweist, wobei das Triebrad (8) - in Vorwärtsfahrtrichtung des Kettenfahrzeugs (1) gesehen - an einem hinteren Endbereich der Laufwerksseite (4) angeordnet ist und im Fahrbetrieb ein unteres Kettentrum der Kette (5) auf Zug belastet, und wobei die umlaufende Kette (5) eine Vielzahl von quer zu einer Kettenlaufrichtung erstreckten Kettenstegen (6) mit jeweils einem Spurbügel (13) aufweist, die über in Kettenlaufrichtung parallel zueinander ausgerichtete flexible Kettenbänder (7) miteinander verbunden sind, **dadurch gekennzeichnet, dass** das Kettenlaufwerk für eine bauartbedingte Höchstgeschwindigkeit von mehr als 50 km/h ausgelegt ist, und dass die Spurbügel (13) quer zur Kettenlaufrichtung asymmetrisch versetzt relativ zu einer Mitte der Kette (5) angeordnet sind.

2. Kettenfahrzeug (1) nach Anspruch 1, **dadurch gekennzeichnet, dass** die Kettenstege (6) quer zur Kettenlaufrichtung asymmetrisch gestaltet sind.

3. Kettenfahrzeug (1) nach dem Oberbegriff des Anspruchs 1 oder 2, **dadurch gekennzeichnet, dass** das Triebrad (8) mehrere, quer zur Kettenlaufrichtung nebeneinander angeordnete Funktionsabschnitte aufweist mit einem zentralen Spurbügelführungsabschnitt (17), einem relativ zu dem Fahrzeugtragrahmen (3) inneren Kettenstegstützabschnitt (19) und einem relativ zu dem Fahrzeugtragrahmen (3) äußeren Kettenbandstützabschnitt (16).

4. Kettenfahrzeug (1) nach Anspruch 3, **dadurch gekennzeichnet, dass** der innere Kettenstegstützabschnitt (19) schmaler gestaltet ist als der äußere Kettenbandstützabschnitt (16).

5. Kettenfahrzeug (1) nach Anspruch 3 oder 4, **dadurch gekennzeichnet, dass** eine umlaufende Stützfläche des inneren Kettenstegstützabschnitts (19) härter gestaltet ist als eine umlaufende Lauffläche des äußeren Kettenbandstützabschnitts (16).

6. Kettenfahrzeug (1) nach einem der Ansprüche 3 bis 5, **dadurch gekennzeichnet, dass** die Lauffläche des äußeren Kettenbandstützabschnitts (16) einen elastisch nachgiebigen Kunststoffmantel, insbesondere aus Polyurethan, aufweist.

7. Kettenfahrzeug (1) nach einem der Ansprüche 3 bis 6, **dadurch gekennzeichnet, dass** der zentrale Spurbügelführungsabschnitt (17) entsprechend einer Teilung der Kettenstege (6) über einen Außenumfang des Spurbügelführungsabschnitts (17) gleichmäßig verteilt eine Vielzahl von Rollenanordnungen (18) aufweist, die die Spurbügel (13) wälzbeweglich führen, wobei gegenüberliegende Seitenflanken (21, 22) des zentralen Spurbügelführungsabschnitts (17) asymmetrisch zu einer Radialmittelebene des Spurbügelführungsabschnitts (17) ausgeführt sind, wobei insbesondere eine innere Seitenflanke (21) eine größere Neigung zu der Radialebene aufweist als eine äußere Seitenflanke (22).

8. Kettenfahrzeug (1) nach einem der vorhergehenden Ansprüche, **dadurch gekennzeichnet, dass** das Spannrad (9) einen zentralen Spurbügelführungsring (27) und einen außenseitig anschließenden Funktionsring (28) aufweist, der zur Kettenbandabstützung vorgesehen ist.

9. Kettenfahrzeug (1) nach einem der vorhergehenden Ansprüche, **dadurch gekennzeichnet, dass** jeder Spurbügel (13) zwischen jeweils zwei Bügelhörnern (14) eine abschnittsweise plane Abstützfläche (29, 30) aufweist, deren - in Kettenlaufrichtung gesehene - Erstreckung größer ist als eine Breite des zugehörigen Kettenstegs, insbesondere einer Kettenstegunterseite, mittels der der Kettensteg (6) an wenigstens einem Kettenband (7) befestigt ist.

10. Triebrad (8) für ein Kettenfahrzeug (1) nach einem der vorhergehenden Ansprüche mit den kennzeichnenden Merkmalen von wenigstens einem der Ansprüche 3 bis 7.

11. Spannrad für ein Kettenfahrzeug nach einem der Ansprüche 1 bis 9 mit den kennzeichnenden Merkmalen des Anspruchs 8.
